# EUROPEAN PATENT APPLICATION

(11) **EP 4 635 589 A1**
(43) Date of publication of application: **22.10.2025**
(21) Application number: 25169261.2
(22) Date of filing: 08.04.2025
(51) Int. Cl.: B01D 3/02, B01D 3/42, B01D 5/00

(54) **DISTILLATION CONDENSER BASED ON TWO-PHASE CLOSED THERMOSIPHON**

(30) Priority: 15.04.2024 US 202463634060 P
(71) Applicant: Precision Analyzer Company L.P., Houston, TX 77064 (US)
(72) Inventor: Urvantsau, Viachaslau, 14320 Fontenay-le-Marmion (FR); Pignol, Stephan Henri Leon, 14320 Clinchamps-sur-Orne (FR)
(74) Representative: Zacco Denmark A/S

(57) **Abstract**

A distillation condenser may include an inner condenser tube that includes an inlet to receive vapors from a distillation vessel and an outlet to connect to a reception vessel to receive a distilled liquid condensed from the vapors; an outer tube enclosing the inner condenser tube; and a heating element coupled to an outside of the outer tube. The distillation condenser may further include a controller configured to control the heating element to heat a working fluid in the outer tube and to cause the distillation condenser to function as a two-phase closed thermosiphon (TPCT) as a result of the heated working fluid.

## Description

### BACKGROUND INFORMATION

Petroleum products are used as a source of fuel in combustion engines. Different types of petroleum products include different constituent elements that exhibit different characteristics. Thus, different constituents may affect the performance of a petroleum product. A distillation process may be performed on a petroleum sample to determine various properties of the sample. The distillation process may need to be performed under specific conditions in order to satisfy testing requirements. Maintaining precise distillation conditions may pose various difficulties.

### BRIEF DESCRIPTION OF THE DRAWINGS

Fig. 1 illustrates a distillation system according to an implementation described herein;
Fig. 2 illustrates exemplary components and operation of a two-phase closed thermosiphon (TPCT) condenser according to an implementation described herein;
Fig. 3 illustrates an exemplary TPCT condenser according to an implementation described herein;
Fig. 4 illustrates exemplary components of a controller unit according to an implementation described herein;
Fig. 5 illustrates exemplary functional components of a controller unit according to an implementation described herein;
Fig. 6 illustrates exemplary components of a TPCT condenser settings database according to an implementation described herein;
Fig. 7 is a flowchart of a process for performing a distillation using a TPCT condenser according to an implementation described herein;
Fig. 8 illustrates a first exemplary plot of temperature data for a TPCT condenser according to an implementation described herein; and
Fig. 9 illustrates a second exemplary plot of temperature data for a TPCT condenser according to an implementation described herein.

### DETAILED DESCRIPTION

The following detailed description refers to the accompanying drawings. The same reference numbers in different drawings identify the same or similar elements.

A distillation apparatus may be used to perform an automatic distillation of a petroleum sample. Data obtained during the distillation of the petroleum sample may be used, for example, to generate a distillation curve that relates one or more properties of the petroleum sample to temperature during the distillation. The distillation curve may then be used to select safe and reliable modes of transportation and storage, and/or to optimize a refinery process, for products associated with the petroleum sample.

A condenser may be used during distillation to condense distilled vapors into a liquid distillate, which may be collected in a reception vessel. The condenser may be cooled using, for example, a circulating cooling bath or ice water without a circulating bath. In order to perform an accurate distillation analysis and/or to satisfy testing standards for distillation of petroleum samples, a condenser may need to satisfy particular requirements. For example, the temperature gradient along the length of a condensation tube immersed in the cooling bath may need to be below a gradient threshold (e.g., less than 1 °C, etc.). As another example, the temperature of the condensation tube may need to remain at a specified temperature for a selected distillation sample. Additionally, if different samples are to be distilled, each with a different condenser temperature requirement, the temperature of the condenser may need to be changed rapidly. An ice water bath or a circulating cooling bath may not be able to satisfy such a set of requirements.

Implementations described herein relate to a distillation condenser based on a two-phase closed thermosiphon (TPCT). A thermosiphon is a heat exchange mechanism that uses convection resulting from a temperature gradient to circulate a fluid without the need for a mechanical pump. A closed thermosiphon is isochoric, meaning that the circulating fluid is confined in a constant volume. A two-phase thermosiphon includes a fluid in both a liquid phase and a gas phase.

The TPCT condenser may include an inner condenser tube that includes an inlet to receive vapors from a distillation vessel and an outlet to connect to a reception vessel to receive a distilled liquid condensed from the vapors, an outer tube enclosing the inner condenser tube, and a connection tube coupled to the outer tube and oriented vertically with respect to the outer tube. In some implementations, the connection tube may open up into a condensation area with a larger surface area. In other implementations, the connection tube my connect to a condensation block. The outer tube may include a working fluid. The TPCT condenser may further include a heating element coupled to the outside of the outer tube, a cooling element coupled to the connection tube, and a controller to control the heating element and the cooling element.

The heating element may cause the working fluid to boil and remain at the boiling point, and thus may enclose the inner condenser tube in a thermostatic liquid bath. In other words, because a boiling fluid remains at the same temperature throughout the volume of the boiling fluid, the inner condenser tube that includes the condensing distillate is maintained at a constant temperature along the entire length. The vapors of the boiling working fluid may rise into the connection tube, cool as a result of heat removed by the cooling element, condense, and fall back down as liquid droplets into the boiling working fluid. Thus, the circulation of the TPCT may be assisted by gravity and efficiently removes heat from the condenser and hence from the condensing distillate inside the inner condenser tube.

The minimum volume of the working fluid may be significantly less than the volume of the outer tube, since during the boiling of the working fluid, the porosity of the vapor-liquid mixture may increase in volume (e.g., the volume of the boiling fluid may double or increase even more, etc.). The larger volume of the boiling working fluid may ensure constant contact of the vapor-liquid foam with the walls of the inner condenser tube, resulting in a low temperature inertia of cooling of the inner condenser tube and an ability to quickly change the working temperature of the TPCT condenser. The continuous boiling of the working fluid may be achieved by controlling the heating element located toward the bottom of the outer tube and the cooling element located toward the top of the connection tube.

The TPCT condenser may include multiple temperature sensors to monitor the temperature inside the TPCT condenser. For example, the TPCT condenser may include a first temperature sensor coupled to the outer tube and located closer to the outlet than the inlet, a second temperature sensor coupled to the outer tube and located closer to the inlet than the outlet, and a third temperature sensor coupled to the connection tube.

The inner condenser tube, outer tube, and connection tube may be manufactured from copper tubing. Copper tubing may enable efficient transfer of heat between the condensing distillate in the inner condenser tube and the working fluid inside the outer tube. Furthermore, in some implementations, a copper mesh sleeve may be stretched over an outer surface of the inner condenser tube to increase heat transfer. In some implementations, the TPCT condenser may include a condensation block, coupled to the connection tube, configured to increase a surface area of the connection tube. The condensation block may increase the contact area of the vapors of the working fluid with the cooling element, increasing the efficiency of heat removal from the TPCT condenser.

Furthermore, in some implementations, the TPCT condenser may include a porous ceramic layer located on an inside surface of the outer tube in a location adjacent to the heating element. The porous ceramic layer may include, for example, silicon oxide obtained by foaming sodium silicate deposited on a metal surface. The porous ceramic layer may function as an additional boiling stabilizer that provides nucleation points for the boiling of the working fluid and may prevent the occurrence of overheating and/or a boiling crisis.

In some implementations, the working fluid may include an azeotropic mixture of methanol and pentane. In other implementations, the working fluid may include a different type of fluid, such as, for example, one or more of methanol, ethanol, pentane, and/or acetone. In yet other implementations, the working fluid may include a hydrofluoroolefin fluid. Hydrofluoroolefins may be used in situations requiring a high level of fire safety due to their non-flammability. An exemplary hydrofluoroolefin that may be used includes cis-1,1,1,4,4,4,-hexafluoro-2-butene.

The controller may be configured to determine a required condenser temperature for a sample, select a heating element setting for the heating element based on the determined required condenser temperature, select a cooling element setting for the cooling element based on the determined required condenser temperature, and apply the selected heating element setting and the selected cooling element setting to the distillation condenser to maintain the required condenser temperature during a distillation of the sample. The TPCT condenser may be included in a distillation system that includes a distillation vessel, a set of sensors coupled to the distillation vessel, and the TPCT condenser may be coupled to the distillation vessel to receive the distilled vapors from the distillation vessel. A distillation system controller may generate a distillation curve for the sample based on values obtained from the set of sensors during a distillation of a sample. The distillation system controller may also control the TPCT controller. In other implementations, the TPCT condenser may be controlled by another controller separate from the distillation system controller.

The TPCT condenser may be able to satisfy the requirements of a low temperature gradient along the entire length of inner condenser tube that includes the condensing distillate as well as providing rapid removal of heat from the condensing distillate. For example, the TPCT condenser may be able to maintain a constant temperature within ± 0.5 °C and a minimum temperature gradient along the length of TPCT condenser of < 0.5 °C. Furthermore, the TPCT condenser enables quick changes in the operating temperature of the working fluid bath. The TPCT condenser does not require the use of a recirculation pump for circulating the working fluid. Elimination of a pump increases reliability and reduces the need for service. Furthermore, the TPCT condenser exhibits lower intrinsic heat capacity in comparison to a liquid recirculating bath or a solid-state metallic bath and enables space separation of a source of cooling from the liquid bath of the condenser. Separating the cooling element from the working fluid enables efficient heat removal and easier maintenance and/or modification of the cooling element.

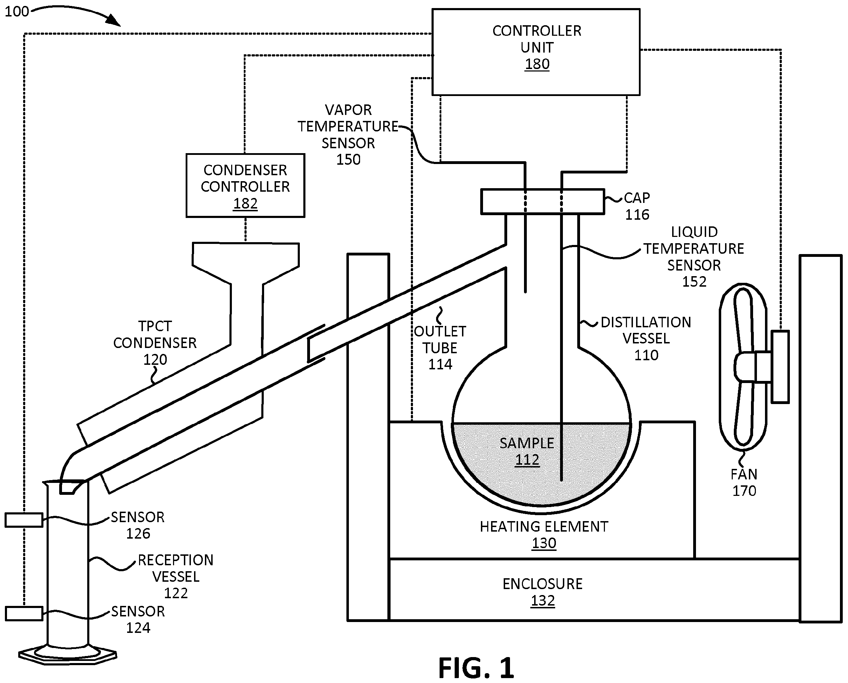

Fig. 1 illustrates a distillation system 100 according to an exemplary implementation described herein. As shown in Fig. 1, distillation system 100 may include a distillation vessel 110, a TPCT condenser 120, a reception vessel 122, distillate level sensor 124, drop sensor 126, a heating element 130, an enclosure 132, a vapor temperature sensor 150, a liquid temperature sensor 152, a fan 170, a controller unit 180, and a condenser controller 182. It should be understood that in other implementations distillation system 100 may include additional elements, such as additional sensors, controllers, heating elements, etc.

Distillation vessel 110 may include a glass flask with a spherical shape to receive a sample 112, such as, for example, a liquid petroleum sample. Distillation vessel 110 may include a cylindrical neck with a lateral outlet tube 114, and a cap 116 configured to seal distillation vessel 110. In some implementations, distillation vessel 110 may be sized to receive a designated amount of sample 112 to be analyzed via distillation. The designated amount may range, for example, from 100 milliliters (ml) up to 20 liters. In other implementations, distillation vessel 110 may be sized to receive a different volume of sample.

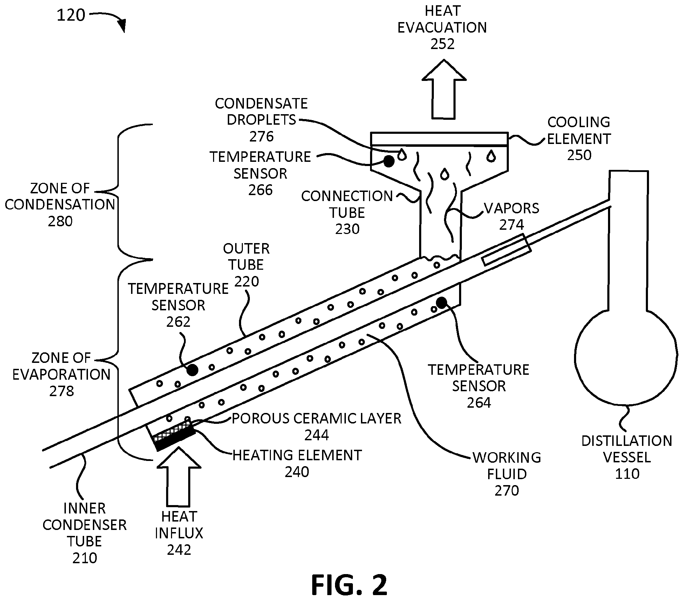

TPCT condenser 120 may condense distillate vapors received from distillation vessel 110 via outlet tube 114 using a TPCT mechanism. Operation of TPCT condenser 120 is described below with reference to Fig. 2. Reception vessel 122 may receive condensed distillate of sample 112 via outlet tube 114 of TPCT condenser 120. Distillate level sensor 124 may measure the level of distillate collected in reception vessel 122 and/or may detect when a predefined amount of distillate has been collected in reception vessel 124. Drop sensor 126 may detect, measure, and/or count drops falling into reception vessel 122 from TPCT condenser 120.

Heating element 130 may include a resistive heating element (or another type of heating element, such as a gas source and a flame, for example) to apply a controllable source of heat to sample 112. Enclosure 132 may provide structural support for, and/or partially or fully enclose, distillation vessel 110, TPCT condenser 120, heating element 130, and/or fan 170. In some implementations, enclosure 132 may additionally provide structural support for, and/or partially or fully enclose, controller unit 180 and/or condenser controller 182.

Vapor temperature sensor 150 may include an inertia-less temperature sensor, such as, for example, a thermocouple, a resistance temperature sensor, a thermistor temperature sensor, a semiconductor temperature sensor, and/or another type of temperature sensor. Vapor temperature sensor 150 may be inserted into the neck of distillation vessel 110 through an opening in cap 116 to measure the vapor temperature of sample 112 during distillation.

Liquid temperature sensor 152 may include an inertia-less temperature sensor, such as, for example, a thermocouple, a resistance temperature sensor, a thermistor temperature sensor, a semiconductor temperature sensor, and/or another type of temperature sensor. Liquid temperature sensor 152 may be inserted into distillation vessel 110 through an opening in cap 116 down to the lower portion of the spherical part of distillation vessel 110 and immersed in sample 112 to measure the liquid temperature of sample 112 during distillation. In some implementations, multiple vapor temperature sensors may be used. Fan 170 may be located and operated at the end of a distillation to cool enclosure 132 and/or distillation vessel 110 after distillation of sample 112 has been completed.

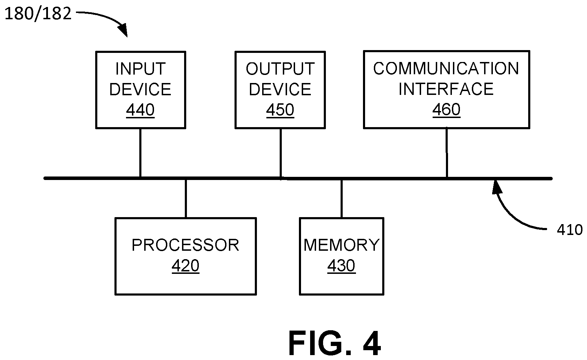

Controller unit 180 may include a processor, microcontroller, and/or computer device that controls the operation of distillation system 100, collects measurements during a distillation, and generates a distillation curve based on the collected measurements. Condenser controller 182 may control the operation of TPCT condenser 120. In some implementations, the functionality of condenser controller 182 may be performed by controller unit 182. Exemplary components of controller unit 180 and/or condenser controller 182 are described below with reference to Figs. 4, 5, and 6.

Although Fig. 1 shows exemplary components of distillation system 100, in other implementations, distillation system 100 may include fewer components, different components, differently arranged components, or additional components than depicted in Fig. 1. Additionally, or alternatively, one or more components of distillation system 100 may perform functions described as being performed by one or more other components of distillation system 100.

Fig. 2 illustrates exemplary components and operation of TPCT condenser 120. As shown in Fig. 2, TPCT condenser 120 may include an inner condenser tube 210, an outer tube 220, a connection tube 230, a heating element 240, a porous ceramic layer 244, a cooling element 250, temperature sensors 262, 264, and 266, and working fluid 270.

Inner condenser tube 210 may include an inlet configured to connect to outlet tube 114 of distillation vessel 110 to receive vapors of distilled sample 112. The vapors may condense inside inner condenser tube 210 into distilled liquid. Inner condenser tube 210 may further include an outlet to connect to reception vessel 122 (not shown in Fig. 2) to receive the distilled liquid. Inner condenser tube 210 may be oriented so that the inlet is higher than the outlet and the distilled liquid flows downward and out the outlet.

Outer tube 220 may enclose inner condenser tube 210 and form a sealed container around inner condenser tube 210. In some implementations, outer tube 220 may be in a coaxial alignment with respect to inner condenser tube 210, in which the longitudinal axis of inner condenser tube 210 is the same as the longitudinal axis of outer tube 220. In other implementations, outer tube 220 may be in a non-coaxial alignment with respect to inner condenser tube 210. For example, the longitudinal axis of inner condenser tube 210 may be below the longitudinal axis of outer tube 220, which may create more volume above inner condenser tube 210 and may facilitate the upward movement of boiling foam and/or vapors into connection tube 230.

Connection tube 230 may be connected to outer tube 220 and oriented vertically with respect to the longitudinal axis of outer tube 220. Connection tube 230 may include an area that widens from the point of attachment of connection tube 230 to outer tube 220 and creates a larger surface area that is coupled to cooling element 250. The larger surface area may increase the efficiency of heat removal through the wall of connection tube 230 by cooling element 250. Outer tube 220 and connection tube 230 may enclose a volume that includes working fluid 270. The dimensions of the lower section of connection tube 230 may be chosen so that the vapor speed in connection tube 230 is significantly lower than the speed of sound in the vapors of the working fluid (e.g., less than 0.2 Mach, etc.) at the maximum heat flow during operation. A vapor speed limit lower than the speed of sound may guarantee minimum entrainment of the condensate flowing downward under gravity.

In some implementations, inner condenser tube 210, outer tube 220, and connection tube 230 may be formed using a metal material. For example, inner condenser tube 210, outer tube 220, and connection tube 230 may each include copper tubing. A metal such as copper may be selected to provide high thermal conductivity. In other implementations, a different type of material may be used for inner condenser tube 210, outer tube 220, and connection tube 230, such as, for example, glass tubing.

Heating element 240 may be coupled to outer tube 220 at a location to facilitate boiling of working fluid 270. For example, heating element 240 may be coupled and/or attached to outer tube 220 at the lowest position of outer tube 220 when TPCT condenser 120 is attached to distillation vessel 110, or within a particular distance of the lowest position (e.g., within a distance corresponding to plus or minus X% of the length of outer tube 220 from the lowest position, etc.). Heating element 240 may provide heat influx 242 into working fluid 270 during operation of TPCT condenser 120. Heating element 240 may include, for example, a resistive heating element (or another type of electronically controllable heating element, such as, for example, a dielectric heating element, an inductive heating element, etc.) to apply a controllable source of heat to working fluid 270. Heat influx 242 from heating element 240 may be controlled by condenser controller 182 and/or controller unit 180. The surface of heat transfer from heating element 240 to the outer wall of outer tube 220 may be minimized for maximum heat flux density, in order to ensure monotonous boiling of working fluid 270 with minimum heating power without the occurrence of boiling crises and/or liquid overheating phenomena.

Heating element 240 may be located adjacent porous ceramic layer 244. Porous ceramic layer 244 may be applied to the inner surface of outer tube 220 at a location where heating element 240 is to be coupled to outer tube 220. Porous ceramic layer 244 may function as an additional boiling stabilizer that provides nucleation points for boiling and prevents the occurrence of overheating phenomena and/or boiling crises. Porous ceramic layer 244 may include a foamed ceramic. For example, porous ceramic layer 244 may include silicon dioxide obtained by foaming of sodium silicate deposited on a metal surface. In other implementations, additional or alternative boiling stabilizers may be used, such as, for example, glass beads inside outer tube 220, a ceramic coating on the inside of outer tube 220 (e.g., a potassium silicate coating, etc.), threads or other types of protrusions on the inside surface of outer tube 220, and/or other types of boiling stabilization structures.

Cooling element 250 may be coupled to connection tube 230 at a location to facilitate condensation of the vapors of working fluid 270. For example, cooling element 250 may be coupled and/or attached to connection tube 230 at the highest position of connection tube 230 when TPCT condenser 120 is attached to distillation vessel 110, or within a particular distance of the highest position (e.g., within a distance corresponding to plus or minus X% of the length of connection tube 230 from the highest position, at least X% of the height of connection tube 230 from the point of attachment of connection tube 230 to outer tube 220, etc.). Cooling element 250 may provide heat evacuation 252 from working fluid 270 during operation of TPCT condenser 120. Cooling element 250 may include, for example, a thermoelectric Peltier effect device (or another type of electronically controllable cooling device, such as, for example, a vapor compression refrigeration device, an adsorption refrigeration device, an absorption refrigeration device, etc.) to apply a controllable source of cooling to working fluid 270. Heat evacuation 252 from cooling element 250 may be controlled by condenser controller 182 and/or controller unit 180.

Temperature sensors 262, 264, and 266 may monitor the temperature of working fluid 270 during operation of TPCT condenser 120. Temperature sensors 262, 264, and 266 may each include a thermocouple, a resistance temperature sensor, a thermistor temperature sensor, a semiconductor temperature sensor, and/or another type of temperature sensor. Temperature sensor 262 may be attached to the outer surface of outer tube 220 at a location closer to the outlet of outer tube 220 than the inlet of outer tube 220 (e.g., in the lower half of outer tube when TPCT condenser 120 is attached to condensation vessel 110, within a particular distance of the outlet of outer tube 220, etc.). Temperature sensor 264 may be attached to the outer surface of outer tube 220 at a location closer to the inlet of outer tube 220 than the outlet of outer tube 220 (e.g., in the upper half of outer tube when TPCT condenser 120 is attached to condensation vessel 110, within a particular distance of the inlet of outer tube 220, etc.). Temperature sensor 266 may be attached to the outer surface of connection tube 230. Condenser controller 182 and/or controller unit 180 may monitor the temperature of working fluid 270 during operation of TPCT condenser 120 using temperature sensor 262, 264, and/or 266 and may adjust a setting of heating element 240 and/or a setting of cooling element during operation of TPCT condenser 120 based on the temperature readings obtained from temperature sensor 262, 264, and/or 266.

Working fluid 270 may include a fluid enclosed by the walls of outer tube 220 and inner condenser tube 210. The volume of working fluid 270 may be selected so that the entire outer surface of inner condenser tube 210 is constantly and/or typically wetted by working fluid 270. Working fluid 270 may include low toxicity and low burning substances with melting points that are significantly higher than the minimum operating temperature of TPCT condenser 120 (e.g., higher than the lowest required operating temperature of TPCT condenser 120 based on the distillation standards for substances to be distilled, etc.), sufficient vapor pressure in the operating range of TPCT condenser 120, and a critical temperature significantly below the maximum operating temperature of TPCT condenser 120. In some implementations, working fluid 270 may include an individual substance, such as, for example, methanol, ethanol, acetone, pentane, and/or another substance. In other implementations, working fluid 270 may preferably include an azeotropic mixture of multiple substances, such as, for example, an azeotropic mixture of methanol and pentane. An azeotropic mixture may maintain the same concentration ratio in liquid and gaseous phases. An azeotropic mixture of methanol and pentane may enable an operating range of 0 to 70 °C for TPCT condenser 120. In other implementations, working fluid 270 may include a different fluid, such as, for example, methanol, ethanol, pentane, and/or acetone. In yet other implementations, working fluid 270 may include a hydrofluoroolefin, such as, for example, cis-1,1,1,4,4,4,-hexafluoro-2-butene.

Working fluid 270 may fill outer tube 220 to a point where connection tube 230 connects to outer tube 220. During operation, heat influx 242 from heating element 240 may cause working fluid 270 to boil and evaporate into connection tube 230. Thus, outer tube 220 may form a zone of evaporation 278. Vapors 274 of working fluid 270 may rise in connection tube 230 and condense upon encountering heat evacuation 252 caused by cooling element 250 into condensate droplets 276. Thus, connection tube 230 may form a zone of condensation 280. Condensate droplets 276 may fall back into the boiling region of working fluid 270, causing a circulation of working fluid 270 that moves heat from inner condenser tube 210 to cooling element 250, while maintaining inner condenser tube 210 at a constant temperature. The constant boiling of working fluid 270 under isochoric conditions in all operation modes of TPCT condenser 120 (e.g., while maintaining a set point temperature, while changing from one set point temperature to another set point temperature, etc.) may guarantee a constant temperature throughout the volume of working fluid 270 and fast and efficient heat removal by TPCT condenser 120.

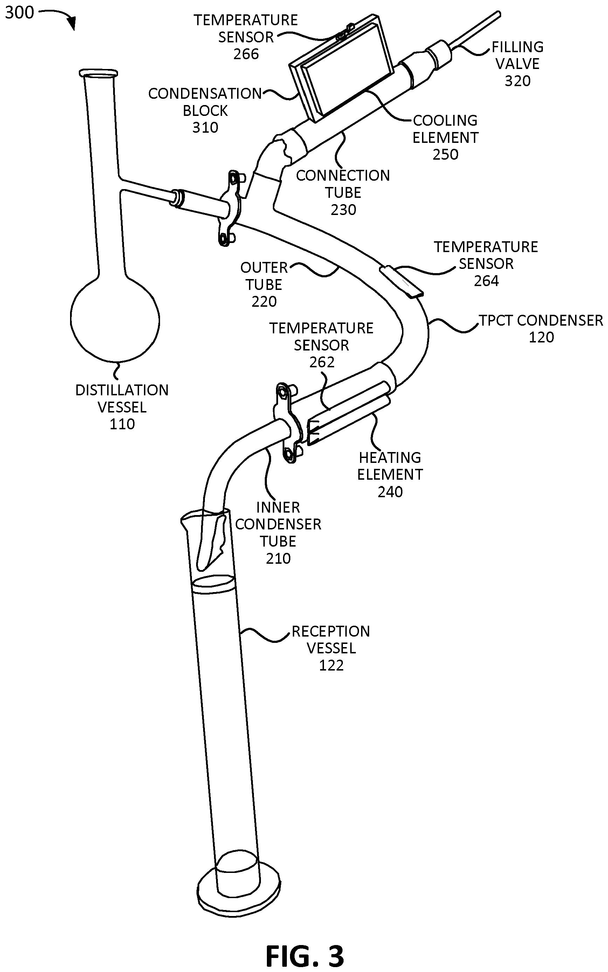

Fig. 3 illustrates an exemplary assembly 300 that includes TPCT condenser 120. As shown in Fig. 3, TPCT condenser 120 may include inner condenser tube 210, outer tube 220, and connection tube 230 formed from copper tubing shaped to curve from distillation vessel 110 to a position of enclosure 132 (not shown in Fig. 3) to connect to reception vessel 122. Temperature sensors 262 and 264 may each include a thermocouple in a jacket soldered to outer tube 220. Temperature sensor 266 may include a thermocouple in a jacket soldered to connection tube 230.

Connection tube 230 may include a condensation block 310 and a filling valve 320. Condensation block 310 may include a hollow rectangular prism made from copper plates that includes channels through which vapors 274 travel inside condensation block 310. Condensation block 310 may include multiple cavities, connected to outer tube 220 via connection tube 230, where condensation of working fluid 270 occurs. Cooling element 250 may be attached to condensation block 310 and condensation block 310 may increase the surface area of condensation as well as the time that vapors 274 spend in contact with walls cooled by cooling element 250. Filling valve 320 may be used to fill TPCT condenser 120 with working fluid 270. While not shown in Fig. 3 for illustrative purposes, outer tube 220 of TPCT condenser 120 may be wrapped in insulation (e.g., foam insulation, fiberglass insulation, etc.) during operation to improve the thermal stability of working fluid 270.

Although Figs. 2 and 3 show exemplary components of TPCT condenser 120, in other implementations, TPCT condenser 120 may include fewer components, different components, additional components, or differently arranged components than depicted in Figs. 2 or 3. Additionally, or alternatively, one or more components of TPCT condenser 120 may perform one or more tasks described as being performed by one or more other components of TPCT condenser 120.

Fig. 4 is a diagram illustrating example components of controller unit 180 and/or condenser controller 182 according to an implementation described herein. As shown in Fig. 4, controller unit 180 and/or condenser controller 182 may each include a bus 410, a processor 420, a memory 430, an input device 440, an output device 450, and a communication interface 460.

Bus 410 may include a path that permits communication among the components of controller unit 180 and/or condenser controller 182. Processor 420 may include any type of single-core processor, multi-core processor, microprocessor, latch-based processor, central processing unit (CPU), and/or processing logic (or families of processors, microprocessors, and/or processing logics) that interprets and executes instructions. In other embodiments, processor 420 may include an application-specific integrated circuit (ASIC), a field-programmable gate array (FPGA), and/or another type of integrated circuit or processing logic.

Memory 430 may include any type of dynamic storage device that may store information and/or instructions, for execution by processor 420, and/or any type of non-volatile storage device that may store information for use by processor 420. For example, memory 430 may include a random access memory (RAM) or another type of dynamic storage device, a read-only memory (ROM) device or another type of static storage device, a content addressable memory (CAM), a magnetic and/or optical recording memory device and its corresponding drive (e.g., a hard disk drive, optical drive, etc.), and/or a removable form of memory, such as a flash memory.

Input device 440 may allow an operator to input information into controller unit 180 and/or condenser controller 182. Input device 440 may include, for example, a keyboard, a mouse, a pen, a microphone, a remote control, an audio capture device, an image and/or video capture device, a touch-screen display, and/or another type of input device. In some embodiments, controller unit 180 and/or condenser controller 182 may be managed remotely and may not include input device 440. In other words, controller unit 180 and/or condenser controller 182 may be "headless" and may not include a keyboard, for example.

Output device 450 may output information to an operator of controller unit 180 and/or condenser controller 182. Output device 450 may include a display, a printer, a speaker, and/or another type of output device. For example, controller unit 180 and/or condenser controller 182 may include a display, which may include a liquid-crystal display (LCD), light emitting diode (LED) display, etc., for displaying content to the operator. In some embodiments, controller unit 180 and/or condenser controller 182 may be managed remotely and may not include output device 450. In other words, controller unit 180 and/or condenser controller 182 may be "headless" and may not include a display, for example.

Communication interface 460 may include a transceiver that enables controller unit 180 and/or condenser controller 182 to communicate with other devices and/or systems via wireless communications (e.g., radio frequency, infrared, and/or visual optics, etc.), wired communications (e.g., conductive wire, twisted pair cable, coaxial cable, transmission line, fiber optic cable, and/or waveguide, etc.), or a combination of wireless and wired communications. Communication interface 460 may include a transmitter that converts baseband signals to radio frequency (RF) signals and/or a receiver that converts RF signals to baseband signals. Communication interface 460 may be coupled to an antenna for transmitting and receiving RF signals.

Communication interface 460 may include a logical component that includes input and/or output ports, input and/or output systems, and/or other input and output components that facilitate the transmission of data to other devices. For example, communication interface 460 may include a network interface card (e.g., Ethernet card) for wired communications and/or a wireless network interface (e.g., a WIFI) card for wireless communications. Communication interface 460 may also include a universal serial bus (USB) port for communications over a cable, a Bluetooth^{™} wireless interface, a radio-frequency identification (RFID) interface, a near-field communications (NFC) wireless interface, and/or any other type of interface that converts data from one form to another form.

As will be described in detail below, controller unit 180 and/or condenser controller 182 may perform certain operations relating to performing a distillation process and controlling TPCT condenser 120 during a distillation. Controller unit 180 and/or condenser controller 182 may perform these operations in response to processor 420 executing software instructions contained in a computer-readable medium, such as memory 430. A computer-readable medium may be defined as a non-transitory memory device. A memory device may be implemented within a single physical memory device or spread across multiple physical memory devices. The software instructions may be read into memory 430 from another computer-readable medium or from another device. The software instructions contained in memory 430 may cause processor 420 to perform processes described herein. Alternatively, hardwired circuitry may be used in place of, or in combination with, software instructions to implement processes described herein. Thus, implementations described herein are not limited to any specific combination of hardware circuitry and software.

Although Fig. 4 shows exemplary components of controller unit 180 and/or condenser controller 182, in other implementations, controller unit 180 and/or condenser controller 182 may include fewer components, different components, additional components, or differently arranged components than depicted in Fig. 4. Additionally, or alternatively, one or more components of controller unit 180 and/or condenser controller 182 may perform one or more tasks described as being performed by one or more other components of controller unit 180 and/or condenser controller 182.

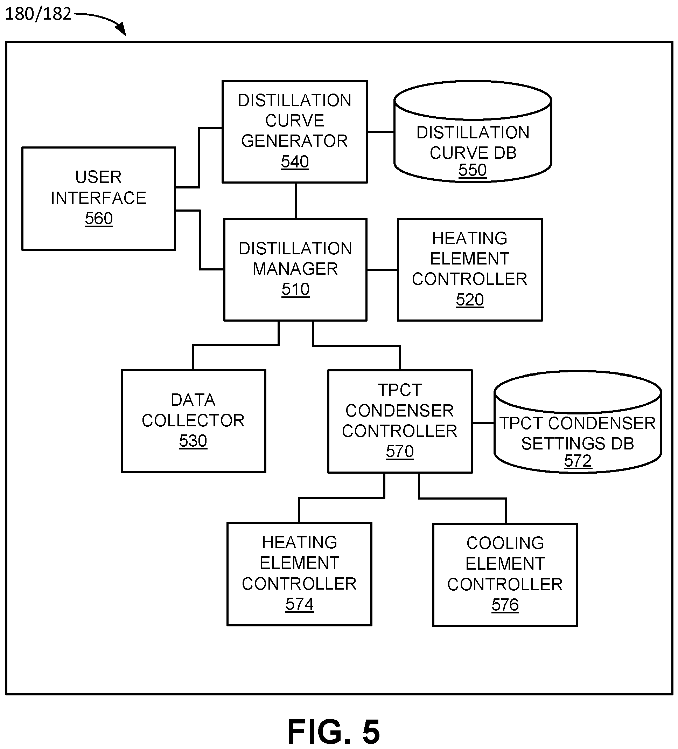

Fig. 5 illustrates exemplary functional components of controller unit 180 and/or condenser controller 182. The functional components of controller unit 180 and/or condenser controller 182 may be implemented, for example, via processor 420 executing instructions from memory 430. For example, a component of controller unit 180 and/or condenser controller 182 may correspond to the structure of processor 420 together with instructions in memory 430 for implementing the functionality of the component. Alternatively, or additionally, some or all of the components of controller unit 180 and/or condenser controller 182 may be implemented via hardwired circuitry. For example, a component of controller unit 180 and/or condenser controller 182 may correspond to the structure of some or all of an ASIC, FPGA, and/or another type of integrated circuit.

As shown in Fig. 5, controller unit 180 and/or condenser controller 182 may include a distillation manager 510, a heating element controller 520, a data collector 530, a distillation curve generator 540, a distillation curve database (DB) 550, a user interface 560, a TPCT condenser controller 570, a TPCT condenser settings DB 572, a heating element controller 574, and a cooling element controller 576.

Distillation manager 510 may manage a distillation process for distillation system 100. For example, distillation manager 510 may initiate a distillation based on a request from a user received via user interface 560 using heating element controller 520. Heating element controller 520 may control heating element 130. Distillation manager 510 may obtain distillation data using data collector 530, generate a distillation curve using distillation curve generator 540, store distillation curve data in distillation curve DB 550, and provide information relating to the generated distillation curve to a user via user interface 560. Data collector 530 may manage collection of data during a distillation. Distillation curve generator 540 may generate a distillation curve based on data obtained from data collector 530 and stored in distillation curve DB 550.

User interface 560 may include a user interface that enables a user to control distillation system 100 and/or receive information generate by controller unit 180, such as a generated distillation curve, messages regarding a distillation process that has been completed or is in progress, and/or other types of messages. Furthermore, user interface 560 may include a user interface that enables a user to control TPCT condenser 120. For example, user interface 560 may enable a user to configure TPCT condenser 120 for a particular type of sample. User interface 560 may be configured to interact with input device 440 and/or output device 450.

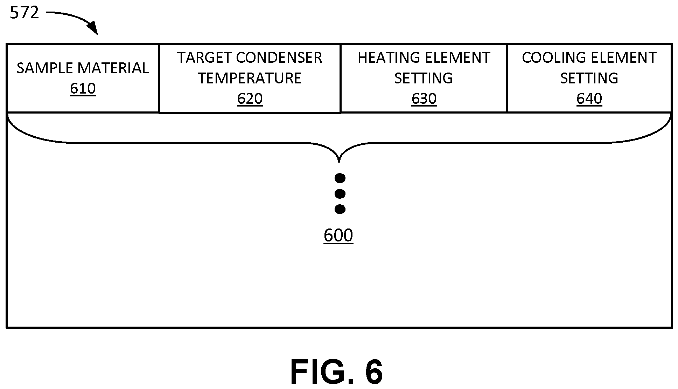

TPCT condenser controller 570 may control TPCT condenser 120. For example, TPCT condenser controller 570 may select a heating element setting and/or a cooling element setting for TPCT condenser 120 for a sample to be distilled. TPCT condenser controller 570 may select a set of settings for a sample based on information stored in TPCT condenser settings DB 572. Exemplary information that may be stored in TPCT condenser settings DB 572 is described below with reference to Fig. 6. Heating element controller 574 may control heating element 240. Cooling element controller 576 may control cooling element 250.

Although Fig. 5 shows exemplary components of controller unit 180 and/or condenser controller 182, in other implementations, controller unit 180 and/or condenser controller 182 may include fewer components, different components, additional components, or differently arranged components than depicted in Fig. 5. Additionally, or alternatively, one or more components of controller unit 180 and/or condenser controller 182 may perform one or more tasks described as being performed by one or more other components of controller unit 180 and/or condenser controller 182.

Fig. 6 illustrates exemplary components of TPCT condenser settings DB 572. As shown in Fig. 6, TPCT condenser settings DB 572 may include one or more TPCT condenser setting records 600. Each TPCT condenser setting record 600 may store information relating to a particular setting for TPCT condenser 120. TPCT condenser setting record 600 may include a sample material field 610, a target condenser temperature field 620, a heating element setting 630, and a cooling element setting 640.

Sample material field 610 may store information identifying a particular sample material. Target condenser temperature field 620 may store information identifying a target temperature for TPCT condenser 120 for the particular sample material. Heating element setting 630 may store information identifying a heating element setting for heating element 240 to maintain TPCT condenser 120 at the target temperature. Cooling element setting 640 may store information identifying a cooling element setting for cooling element 250 to maintain TPCT condenser 120 at the target temperature. The heating element setting and cooling element setting may include, for example, a percentage of maximum power to be applied to heating element 240 and/or a percentage of maximum power to be applied to cooling element 250.

Although Fig. 6 shows exemplary components of TPCT condenser settings DB 572, in other implementations, TPCT condenser settings DB 572 may include fewer components, different components, additional components, or differently arranged components than depicted in Fig. 6.

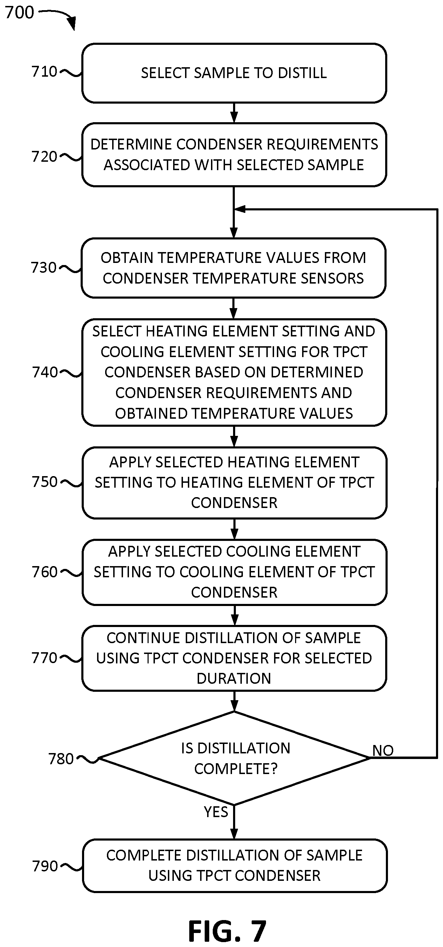

Fig. 7 is a flowchart of a process 700 for performing a distillation using a TPCT condenser according to an implementation described herein. In some implementations, the process of Fig. 7 may be performed by, and/or using, distillation system 100. In other implementations, some or all of the process of Fig. 7 may be performed by, or using, another device or a group of devices separate from distillation system 100.

As shown in Fig. 7, process 700 may include selecting a sample to distill (block 710) and determining condenser requirements associated with the selected sample (block 720). For example, a user may select a sample material to distill and may select the sample material using user interface 560. In response, distillation system 100 may determine the target temperature for TPCT condenser 120 and select a heating element setting for heating element 240 and a cooling element setting for cooling element 250 for the target temperature based on information stored in TPCT condenser settings DB 572.

Process 700 may further include obtaining temperature values from condenser temperature sensors (block 730), selecting a heating element setting and cooling element setting for a TPCT condenser based on the determined condenser requirements (block 740), applying the selected heating element setting to a heating element of the TPCT condenser (block 750), and applying the selected cooling element setting to a cooling element of the TPCT condenser (block 760). For example, condenser controller 182 and/or controller unit 180 may obtain temperature readings from temperature sensors 262, temperature sensor 264, and/or temperature sensor 266, compare the obtained temperature readings to the target temperature, and adjust the heating element setting and cooling element setting in order to arrive at the target temperature of working fluid 270. Condenser controller 182 and/or controller unit 180 may then apply the selected heating element setting to heating element 240 and the selected cooling element setting to cooling element 250. The heating element setting may correspond to an amount of power to be applied to heating element 240 as a percentage of the maximum power that can be applied to heating element 240. The cooling element setting may correspond to an amount of power to be applied to cooling element 250 as a percentage of the maximum power that can be applied to cooling element 250. In other implementations, the heater element setting and/or the cooling element setting may correspond to temperature settings, time duration settings, and/or other types of settings to control heating element 240 and/or cooling element 250.

Process 700 may further include continuing a distillation of the sample using the TPCT condenser for a selected duration (block 770). For example, controller unit 180 may control heating element 130 and may initiate distillation of sample 112, or continue to distill sample 112 if distillation has already started in distillation vessel 110, while TPCT condenser 120 is maintained at the target temperature. Controller unit 180 may collect distillation data during the distillation using vapor temperature sensor 150 and/or liquid temperature sensor 152, and store the collected distillation data in distillation curve DB 550.

The selected duration may correspond to a duration before the heating element setting and cooling element setting are recalculated based on the temperature readings from temperature sensors 262, temperature sensor 264, and/or temperature sensor 266. For example, the heating element setting and the cooling element setting may be recalculated every 0.5 second, every 1 second, or using another selected duration from the start of distillation until the designated end of distillation, because the amount of thermal energy removed from inner condenser tube 210 may vary significantly over time during the distillation. Thus, after the selected duration passes, a determination may be made as to whether the distillation is complete (block 780). The distillation may be determined to be complete after a predefined time period elapses, when all sample 112 has evaporated, when distillate level sensor 124 detects that distillate in reception vessel 122 has reached a predefined volume, and/or based on another criterion. If it is determined that the distillation is not complete (block 780 - NO), processing may return to block 730 to obtain new temperature values from the condenser temperature sensors. If it is determined that the distillation is complete (block 780 - YES), distillation of the sample using the TPCT condenser may be completed (block 790).

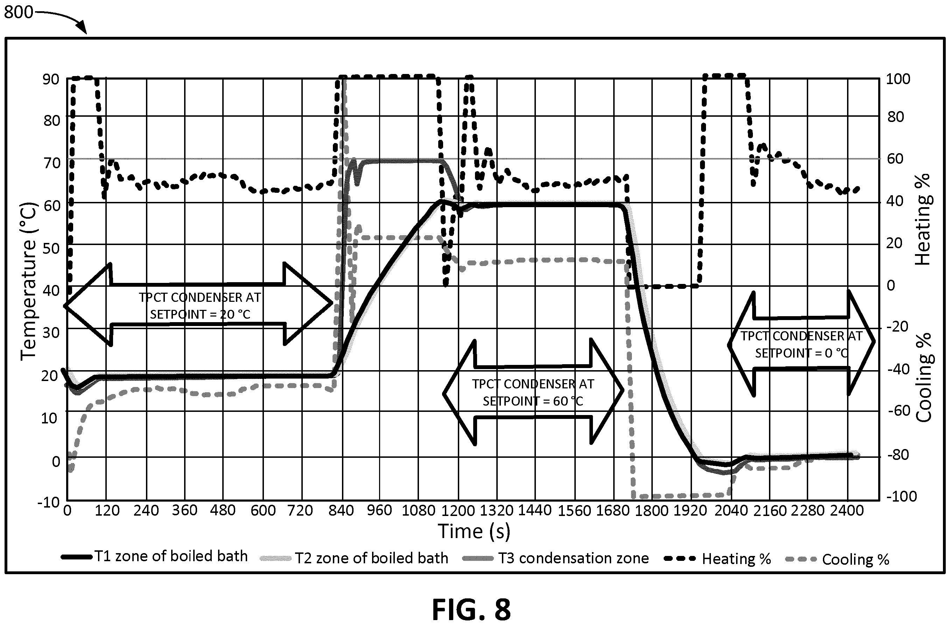

Fig. 8 illustrates a first exemplary plot 800 of temperature data for TPCT condenser 120. As shown in Fig. 8, plot 800 illustrates the temperature of TPCT condenser 120 in response to particular heating element and cooling element settings and switching between different temperature set points. The horizontal axis depicts time in seconds and the vertical axis depicts the measured temperature on the left side of plot 800 and the percentage of heating power applied to heating element 240 and the percentage of cooling power applied to cooling element 250 on the right side of plot 800. The plotted lines correspond to the measured temperature by temperature sensor 262 (T1), the measured temperature of temperature sensor 264 (T2), the measured temperature of temperature sensor 266 (T3), the percentage of heating power applied to heating element 240, and the percentage of cooling power applied to cooling element 250. Plot 800 illustrates five different operating settings.

In setting 1, from 0 to 840 seconds, the target set point for TPCT condenser 120 is 20 °C, which is achieved by a heating percentage of 50% for heating element 240 and a cooling percentage of 50% for cooling element 250. As shown in Fig. 8, all three temperature sensors T1, T2, and T3 measure a temperature of 20 °C.

The next target set point for TPCT condenser 120 is 60 °C. When the temperature of TPCT condenser 120 needs to be raised quickly, the heating element setting may be set to 100% power and the cooling element setting may be set to 0% power (i.e., turned off) to reduce the condensation of vapors 274 to a minimum, thereby reducing the flow of energy to a minimum value so that zone of evaporation 278 heats up more quickly. Alternatively, cooling element 250 may be switched to reverse mode to also heat up zone of condensation 280. A Peltier device may be operated in reverse mode to heat up a surface, rather than to cool the surface. Heating connection tube 230 and zone of condensation 280 may decrease the switching time from the previous temperature to the new temperature (e.g., from 20 °C to 60 °C, etc.), by stopping the condensation process of vapors 274, enabling the energy of heat influx 242 to be spent solely on the rapid heating of working fluid 270. Thus, in setting 2, from 840 seconds to about 1100 seconds, a 100% power setting is applied to heating element 240 and -50% power is applied to cooling element 250 (i.e., cooling element 250 is operated in reverse mode).

In setting 3, at 1200 seconds, the target set point for TPCT condenser 120 is then changed to 60 °C, which can be achieved by a heating percentage of 50% for heating element 240 and a cooling percentage of -10% for cooling element 250. TPCT condenser 120 quickly stabilizes at a temperature of 60 °C, as measured by all three temperature sensors T1, T2, and T3. The 60 °C target set point is maintained from 1200 seconds to 1700 seconds.

The next target set point for TPCT condenser 120 is 0 °C. If the temperature of TPCT condenser 120 is to be dropped, the heating of working fluid 270 may be increased while maximizing the power to cooling element 250. Increasing the heat may increase circulation movement of vapors 274 to cooling element 250. Thus, in setting 4, from 1700 seconds to about 2000 seconds, a 100% power setting is applied to heating element 240 and 100% power is applied to cooling element 250 to increase cooling of working fluid 270.

In setting 5, at about 2100 seconds, the target set point for TPCT condenser 120 is changed to 0 °C, which is achieved by a heating percentage of 50% for heating element 240 and a cooling percentage of 80% for cooling element 250. TPCT condenser 120 quickly stabilizes at a temperature of 0 °C, as measured by all three temperature sensors T1, T2, and T3. The 0 °C target set point is maintained from 2000 seconds to 2400 seconds.

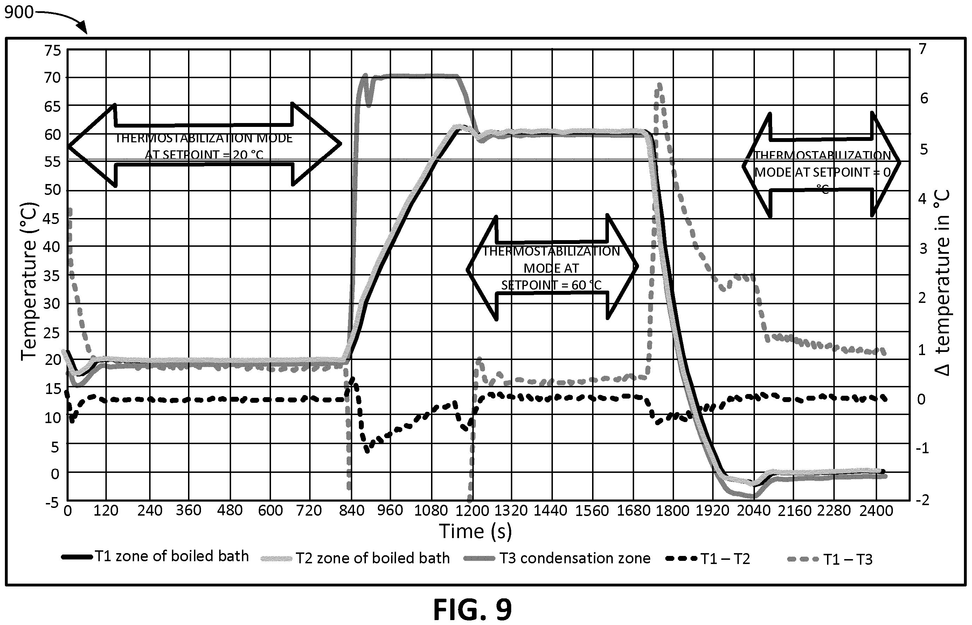

Fig. 9 illustrates a second exemplary plot 900 of temperature data for TPCT condenser 120 generated using the same sample data used in generating plot 800. As shown in Fig. 9, plot 900 illustrates the temperature of TPCT condenser 120 in response to the heating element and cooling element settings shown in Fig. 8. The horizontal axis depicts time in seconds and the vertical axis depicts the measured temperature on the left side of plot 900 and the temperature difference between temperature sensors on the right side of plot 900. The plotted lines correspond to the measured temperature by temperature sensor 262 (T1), the measured temperature of temperature sensor 264 (T2), the measured temperature of temperature sensor 266 (T3), the temperature difference between T1 and T2, and the temperature difference between T1 and T3.

The difference between T1 and T2 illustrates the stability of a thermostatic mode that maintains TPCT condenser 120 at a set temperature. As shown in Fig. 9, the values of T1-T2 tend toward zero, indicating a thermostatic condition with a minimal temperature gradient between different points of working fluid 270. The difference between T1 and T3 illustrates the efficiency of thermal transmission between zone of evaporation 278 and zone of condensation 280. As shown in Fig. 9, the values of T1-T3 do not exceed 0.5 °C while at a set point temperature or when transitioning to a new set point temperature. The minimal temperature gradient and its monotonic dependence on the heat transferred from zone of evaporation 278 to zone of condensation 280 indicates no undesirable flooding has occurred. The continuous monitoring of the temperature of TPCT condenser 120 at different points via temperature sensors 262, 264, and 266 enables monitoring of the performance of TPCT condenser 120 during operation.

In the preceding specification, various preferred embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

For example, while implementations are described herein for a TPCT condenser that is maintained at a set temperature during distillation, in other implementations, a TPCT condenser may be used for other applications that requires a constant temperature and a rapid ability to change from a first set temperature to a second temperature. As an example, a TPCT condenser may be used as a thermostatic bath for a chemical reaction vessel that needs to maintain a solution at a specific temperature for a chemical reaction and/or that needs to rapidly change between different temperature set points.

Furthermore, while series of blocks have been described with respect to Fig. 7, the order of the blocks may be modified in other implementations. Further, non-dependent blocks and/or signals may be performed in parallel.

It will be apparent that systems and/or methods, as described above, may be implemented in many different forms of software, firmware, and hardware in the implementations illustrated in the figures. The actual software code or specialized control hardware used to implement these systems and methods is not limiting of the embodiments. Thus, the operation and behavior of the systems and methods were described without reference to the specific software code--it being understood that software and control hardware can be designed to implement the systems and methods based on the description herein.

Further, certain portions, described above, may be implemented as a component that performs one or more functions. A component, as used herein, may include hardware, such as a processor, an ASIC, or a FPGA, or a combination of hardware and software (e.g., a processor executing software).

It should be emphasized that the terms "comprises" / "comprising" when used in this specification are taken to specify the presence of stated features, integers, steps or components but does not preclude the presence or addition of one or more other features, integers, steps, components or groups thereof.

The term "logic," as used herein, may refer to a combination of one or more processors configured to execute instructions stored in one or more memory devices, may refer to hardwired circuitry, and/or may refer to a combination thereof. Furthermore, a logic may be included in a single device or may be distributed across multiple, and possibly remote, devices.

For the purposes of describing and defining the present invention, it is additionally noted that the term "substantially" is utilized herein to represent the inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

No element, act, or instruction used in the present application should be construed as critical or essential to the embodiments unless explicitly described as such. Also, as used herein, the article "a" is intended to include one or more items. Further, the phrase "based on" is intended to mean "based, at least in part, on" unless explicitly stated otherwise.

Exemplary devices, systems, and methods are set out in the following items:
1. A distillation condenser comprising:
   an inner condenser tube that includes an inlet to receive vapors from a distillation vessel and an outlet to connect to a reception vessel to receive a distilled liquid condensed from the vapors;
   an outer tube enclosing the inner condenser tube;
   a heating element coupled to an outside of the outer tube; and
   a controller configured to control the heating element to heat a working fluid in the outer tube and to cause the distillation condenser to function as a two-phase closed thermosiphon (TPCT) as a result of the heated working fluid.
2. The distillation condenser of item 1, further comprising:
   a connection tube coupled to the outer tube and oriented vertically with respect to the outer tube, wherein vapors of the working fluid rise through the connection tube.
3. The distillation condenser of item 2, further comprising:
   a condensation block coupled to the connection tube configured to increase a surface area of the connection tube, wherein vapors of the working fluid condense in the condensation block.
4. The distillation condenser of item 3, further comprising:
   a cooling element coupled to the condensation block, wherein the controller is further configured to control the cooling element to condense vapors of the working fluid in the condensation block.
5. The distillation condenser of item 4, further comprising:
   a first temperature sensor coupled to the outer tube and located closer to the outlet than the inlet;
   a second temperature sensor coupled to the outer tube and located closer to the inlet than the outlet; and
   a third temperature sensor coupled to the condensation block.
6. The distillation condenser of item 1, wherein the inner condenser tube and the outer tube each include copper tubing.
7. The distillation condenser of item 1, further comprising:
   a porous ceramic layer located on an inside surface of the outer tube in a location adjacent to the heating element.
8. The distillation condenser of item 1, further comprising the working fluid, wherein the working fluid includes an azeotropic mixture of methanol and pentane.
9. The distillation condenser of item 1, further comprising the working fluid, wherein the working fluid includes at least one of methanol, ethanol, pentane, acetone, or a hydrofluoroolefin.
10. The distillation condenser of item 1, further comprising:
   a cooling element, and wherein the controller is configured to:
   determine a required condenser temperature for a sample;
   select a heating element setting for the heating element based on the determined required condenser temperature;
   select a cooling element setting for the cooling element based on the determined required condenser temperature; and
   apply the selected heating element setting and the selected cooling element setting to the distillation condenser to maintain the required condenser temperature during a distillation of the sample.
11. A distillation system comprising:
   a distillation device comprising:
      a distillation vessel;
      a plurality of sensors coupled to the distillation vessel; and
      a condenser coupled to the distillation vessel and configured to function as a two-phase closed thermosiphon (TPCT); and
   a controller configured to:
      generate a distillation curve for a sample based on a plurality of values obtained from the plurality of sensors during a distillation of a sample; and
      control the operation of the TPCT to maintain the condenser at a particular temperature during the distillation of the sample.
12. The distillation system of item 11, wherein a circulation in the TPCT is assisted by gravity.
13. The distillation system of item 11, wherein the condenser includes an inner condenser tube, and wherein the TPCT encloses the inner condenser tube in a thermostatic liquid bath.
14. The distillation system of item 11, wherein the condenser includes:
   an inner condenser tube that includes an inlet to receive vapors from the distillation vessel and an outlet to connect to a reception vessel to receive a distilled liquid condensed from the vapors;
   an outer tube enclosing the inner condenser tube;
   a heating element coupled to an outside of the outer tube; and
   wherein the controller is configured to control the heating element to heat a working fluid in the outer tube and to cause the condenser to function as the TPCT as a result of the heated working fluid.
15. The distillation system of item 14, wherein the condenser further includes:
   a connection tube coupled to the outer tube and oriented vertically with respect to the outer tube, wherein vapors of the working fluid rise in the connection tube;
   a condensation block, coupled to the connection tube, configured to increase a surface area of the connection tube, wherein vapors of the working fluid condense in the condensation block; and
   a cooling element coupled to the condensation block, wherein the controller is further configured to control the cooling element to condense vapors of the working fluid in the condensation block.
16. The distillation system of item 15, wherein the controller is further configured to:
   determine the particular temperature for the condenser;
   select a heating element setting for the heating element based on the determined particular temperature;
   select a cooling element setting for the cooling element based on the determined particular temperature; and
   apply the selected heating element setting and the selected cooling element setting to the condenser to maintain the condenser at the particular temperature during the distillation of the sample.
17. The distillation system of item 14, wherein the condenser further includes a porous ceramic layer located on an inside surface of the outer tube in a location adjacent to the heating element.
18. The distillation system of item 11, wherein the condenser includes a working fluid comprising an azeotropic mixture of methanol and pentane.
19. The distillation system of item 11, wherein the condenser includes a working fluid comprising at least one of methanol, ethanol, pentane, acetone, or a hydrofluoroolefin.
20. A method comprising:
   determining a required condenser temperature for a sample;
   selecting a heating element setting for a heating element of a condenser based on the determined required condenser temperature;
   selecting a cooling element setting for a cooling element of the condenser based on the determined required condenser temperature; and
   applying the heating element setting to the heating element and the cooling element setting to the cooling element during a distillation of the sample, wherein the condenser functions as a two-phase closed thermosiphon (TPCT) that maintains the condenser at the required condenser temperature during the distillation of the sample.

## Claims

1. A distillation condenser comprising:
an inner condenser tube that includes an inlet to receive vapors from a distillation vessel and an outlet to connect to a reception vessel to receive a distilled liquid condensed from the vapors;
an outer tube enclosing the inner condenser tube;
a heating element coupled to an outside of the outer tube; and
a controller configured to control the heating element to heat a working fluid in the outer tube and to cause the distillation condenser to function as a two-phase closed thermosiphon (TPCT) as a result of the heated working fluid.

2. The distillation condenser of claim 1, further comprising:
a connection tube coupled to the outer tube and oriented vertically with respect to the outer tube, wherein vapors of the working fluid rise through the connection tube.

3. The distillation condenser of claim 2, further comprising:
a condensation block coupled to the connection tube configured to increase a surface area of the connection tube, wherein vapors of the working fluid condense in the condensation block.

4. The distillation condenser of claim 3, further comprising:
a cooling element coupled to the condensation block, wherein the controller is further configured to control the cooling element to condense vapors of the working fluid in the condensation block, and
wherein the inner condenser tube and the outer tube each include copper tubing.

5. The distillation condenser of claim 4, further comprising:
a first temperature sensor coupled to the outer tube and located closer to the outlet than the inlet;
a second temperature sensor coupled to the outer tube and located closer to the inlet than the outlet; and
a third temperature sensor coupled to the condensation block.

6. The distillation condenser of claim 1, further comprising:
a porous ceramic layer located on an inside surface of the outer tube in a location adjacent to the heating element, wherein the inner condenser tube and the outer tube each include copper tubing.

7. The distillation condenser of claim 1, further comprising the working fluid, wherein the working fluid includes at least one of methanol, ethanol, pentane, acetone, a hydrofluoroolefin, or an azeotropic mixture of methanol and pentane.

8. The distillation condenser of claim 1, further comprising:
a cooling element, and wherein the controller is configured to:
determine a required condenser temperature for a sample;
select a heating element setting for the heating element based on the determined required condenser temperature;
select a cooling element setting for the cooling element based on the determined required condenser temperature; and
apply the selected heating element setting and the selected cooling element setting to the distillation condenser to maintain the required condenser temperature during a distillation of the sample.

9. A distillation system comprising:
a distillation device comprising:
a distillation vessel;
a plurality of sensors coupled to the distillation vessel; and
a condenser coupled to the distillation vessel and configured to function as a two-phase closed thermosiphon (TPCT); and
a controller configured to:
generate a distillation curve for a sample based on a plurality of values obtained from the plurality of sensors during a distillation of a sample; and
control the operation of the TPCT to maintain the condenser at a particular temperature during the distillation of the sample.

10. The distillation system of claim 9, wherein the condenser includes an inner condenser tube,
wherein the TPCT encloses the inner condenser tube in a thermostatic liquid bath, and
wherein a circulation in the TPCT is assisted by gravity.

11. The distillation system of claim 9, wherein the condenser includes:
an inner condenser tube that includes an inlet to receive vapors from the distillation vessel and an outlet to connect to a reception vessel to receive a distilled liquid condensed from the vapors;
an outer tube enclosing the inner condenser tube;
a heating element coupled to an outside of the outer tube; and
wherein the controller is configured to control the heating element to heat a working fluid in the outer tube and to cause the condenser to function as the TPCT as a result of the heated working fluid.

12. The distillation system of claim 11, wherein the condenser further includes:
a connection tube coupled to the outer tube and oriented vertically with respect to the outer tube, wherein vapors of the working fluid rise in the connection tube;
a condensation block, coupled to the connection tube, configured to increase a surface area of the connection tube, wherein vapors of the working fluid condense in the condensation block; and
a cooling element coupled to the condensation block, wherein the controller is further configured to control the cooling element to condense vapors of the working fluid in the condensation block.

13. The distillation system of claim 12, wherein the controller is further configured to:
determine the particular temperature for the condenser;
select a heating element setting for the heating element based on the determined particular temperature;
select a cooling element setting for the cooling element based on the determined particular temperature; and
apply the selected heating element setting and the selected cooling element setting to the condenser to maintain the condenser at the particular temperature during the distillation of the sample.

14. The distillation system of claim 11, wherein the condenser further includes a porous ceramic layer located on an inside surface of the outer tube in a location adjacent to the heating element, and
wherein the condenser includes a working fluid comprising at least one of methanol, ethanol, pentane, acetone, a hydrofluoroolefin or an azeotropic mixture of methanol and pentane.

15. A method comprising:
determining a required condenser temperature for a sample;
selecting a heating element setting for a heating element of a condenser based on the determined required condenser temperature;
selecting a cooling element setting for a cooling element of the condenser based on the determined required condenser temperature; and
applying the heating element setting to the heating element and the cooling element setting to the cooling element during a distillation of the sample, wherein the condenser functions as a two-phase closed thermosiphon (TPCT) that maintains the condenser at the required condenser temperature during the distillation of the sample.
